# EUROPEAN PATENT SPECIFICATION

(11) **EP 3 307 686 B1**
(45) Date of publication and mention of the grant of the patent: **15.05.2024**
(21) Application number: 16742395.3
(22) Date of filing: 13.06.2016
(51) Int. Cl.: G02B 1/115, C03C 17/34, C03C 17/42

(54) **TRANSPARENT OR TRANSLUCENT SUBSTRATE COMPRISING A SUPERFICIAL FILM HAVING OPTICAL SELECTIVITY**
TRANSPARENTES ODER LICHTDURCHLÄSSIGES SUBSTRAT MIT EINER OPTISCH-SELEKTIVEN OBERFLÄCHENSCHICHT
SUBSTRAT TRANSPARENT OU TRANSLUCIDE MUNI D'UN FILM SUPERFICIEL AYANT UNE SÉLECTIVITÉ OPTIQUE

(30) Priority: 12.06.2015 IT UB20151002
(43) Date of publication of application: 18.04.2018
(73) Proprietor: Allamprese Manes Rossi, Federico, Albignasego (PD) (IT)
(72) Inventor: ALLAMPRESE MANES ROSSI, Federico, I-35020 Albignasego (PD) (IT); DECARLI, Paolo, I-38070 Vallelaghi (TN) (IT); TONEZZER, Michele, I-38049 Altopiano della Vigolana (TN) (IT)
(74) Representative: Porta & Consulenti Associati S.p.A.
(86) International application number: PCT/IB2016/053472
(87) International publication number: WO 2016/199106

(56) References cited:
- JP-A- 2002 156 507
- US-A1- 2015 020 745

## Description

### Background of the invention

The present invention refers to a transparent or translucent substrate comprising a superficial film having optical selectivity to solar or artificial radiation, suitable for transmitting and reflecting one or more spectral components of incident light radiation (solar or artificial), for protecting people, plants, animals or objects in general.

In particular, the present invention concerns a transparent or translucent substrate comprising a superficial film including a plurality of superimposed layers alternately consisting of a first and a second material having, respectively, suitable refraction indices and different nanometric dimensions.

In the present description and in the subsequent claims, the term "transparent or translucent substrate" is meant to indicate any substrate, made of glassy or plastic material, rigid, semi-rigid or flexible, suitable for being at least partially hit by solar or artificial radiation (for example from sun lamps), on which the superficial film is deposited through vacuum deposition techniques.

The transparent or translucent substrates comprising a superficial film with optical selectivity of the invention have preferred but not exclusive use in making screens, walls, dividers or protective covers in general, for example to catch the sun or to protect people, plants, animals or objects in general, from solar or artificial radiation considered to be harmful, in particular UVB and short UVA radiation.

### Prior art

It is known that exposure to solar and artificial radiation can cause a series of acute and chronic effects on the human body. The most high-risk areas are the skin, the immune system and the visual apparatus.

In the short term, sunburns can be caused whereas in the long term the harmful effects can include an increased risk of skin cancer, early ageing, cataracts, pterygium, macular degeneration, immunosuppression, etc.

In particular, UVB rays (290-320 nm) cause the most common biological reactions due to solar or artificial exposure, are erythemogenic, stimulate melanogenesis and also seem to be responsible for direct damage to cellular DNA.

On the other hand UVA rays are less powerful electromagnetic radiation but are able to damage collagen and elastin, particularly in their most energetic part (short UVAs 320-350 nm).

Solar radiation has harmful effects also on objects and materials of various kinds, causing the deterioration thereof.

Methods, devices and substances are known for protecting people, and also animals, plants or objects, from solar radiation.

For example, plastic films are known with added substances such as additives in general, paints or pigments, having the functionality of absorbing ultraviolet radiation, also known as UV absorbers.

Coating films are also known, comprising a plurality of thin layers of appropriate materials, with high and low refractive index, respectively, used in making items such as eyeglass lenses, visors, panes, protective screens, etc., to adequately protect the eye from solar radiation.

US 2004/0240067 discloses a thin multi-layer film, preferably for use with photochromic lenses, wherein the thin film comprises a plurality of layers, preferably including dielectric layers, selected and arranged so as to reflect less than 6% of UVA rays in the range from about 315 to about 400 nm. The thin film preferably has an activation value higher than 25%.

JP 2002/156507 discloses an anti-reflection film and an optical element with low reflectance with respect to the regions of wavelength in the vicinity of 365 nm or 436 nm and with broad band, effective and excellent antireflection characteristics. In particular, the anti-reflection film is a multi-layer film with a four-layer structure formed on a substrate, wherein the first and third layer have a high refractive index (2,10 - 2,40) and the second and fourth layer have a low refractive index (1,42 - 1,50) in the wavelength range 320-450 nm.

WO 2013/175274 discloses a multi-layer film (M) deposited or grown on at least one surface (S1) of a glassy or plastic substrate (S). In the specific case given as an example, said multi-layer (M) consists of 6 single layers (A, B), respectively alternating with high and low refractive index.

US 2015/0020745 discloses covering panels and screens comprising a transparent substrate and an anti-reflection film grown on at least one surface of said transparent substrate, according to the preamble of claims 1 and 10, wherein the anti-reflection film comprises a plurality of layers arranged so as to obtain a reflectance less than or equal to 0.5% so as to impede the viewing of objects beyond the aforementioned panels or screens as little as possible.

### Summary of the invention

In relation to the plastic films of the state of the art with added UV absorbers, the Applicant has observed that such films have some technological and functional limitations. In particular, it has been found that such coatings have low stability of optical properties that does not allow the complete protection of the transparent or translucent substrate from interaction with the different components of light radiation, in particular UVB radiation. This can lead to phenomena of yellowing, of decreasing chromatic intensity or phenomena of fading of the substrate itself or modification of the mechanical characteristics of the material of which the substrate itself consists.

Moreover, known UV absorbers have low chromatic precision in the selection of spectral components to screen and transmit, as well as low chromatic versatility. In relation to conventional multi-layer films used in the optical field, the Applicant has observed, as will be described in greater detail hereinafter, that such films are unable to reflect the UVB spectral component selectively.

Concerning this, the Applicant has indeed observed that the anti-reflection films disclosed by US 2015/0020745 can transmit up to 30% of UV radiation in the entire field of wavelengths of this radiation (280-380 nm).

The Applicant has also observed that in order to hinder the viewing of objects as little as possible, the only useful parameter in designing the anti-reflection films disclosed by US 2015/0020745 is the overall thickness of the alternate layers of materials with high and low refractive index that can, on each surface of the substrate, take on values comprised between 50 and 250 nm for the materials with high refractive index and between 100 and 700 nm for the materials with low refractive index.

Finally, in accordance with US 2015/0020745, the thickness of the single layers is never identified as a useful parameter for designing the anti-reflection film that, as outlined above, reduces the transmittance of UVA/UVB radiation in a non-selective manner.

The Applicant has therefore set itself the task of providing a transparent or translucent substrate comprising a superficial film having optical selectivity to solar or artificial radiation capable of reducing and/or overcoming the aforementioned drawbacks and capable of selectively and prevalently transmitting the long UVA spectral component and the first 20 nm of visible light (350 - 420 nm) in order to allow safe tanning; on the other hand reflecting the UVB (290 - 320 nm) and short UVA (320-350 nm) spectral component to ensure the safety of the person getting tanned, as well as reflecting the visible part of solar radiation (420-700 nm) to allow tanning in the shade. The combination of these optical characteristics indeed makes it possible to target the spectral components (both UV and visible part) to be screened and to be transmitted to protect people, plants, animals or objects in general.

In accordance with the present invention, it has surprisingly been found that these desired characteristics can be simultaneously obtained by suitably combining the sequence, the thicknesses and the refraction indices of the single layers forming the superficial film with optical selectivity.

Therefore, the present invention concerns, in a first aspect thereof, a transparent or translucent substrate comprising a superficial film including a plurality of layers directly superimposed over one another alternately consisting of a first and a second material having suitable refraction indices and different nanometric dimensions according to claim 1; preferred characteristics of the substrate are given in the dependent claims.

More specifically, the transparent or translucent substrate made of glassy or plastic material according to the invention comprises a superficial film including from 10 to 50 layers directly superimposed over one another alternately consisting of a first and a second material having a refractive index at 550 nm equal to or greater and, respectively, lower than 2, wherein each of the layers that consists of said first material has a thickness comprised between 10 and 110 nm and each of the layers that consists of said second material has a thickness comprised between 50 and 250 nm.

In the present description and in the subsequent claims, the term "thickness" is meant to indicate the physical thickness (nm) of the layer considered.

In the present description and in the subsequent claims, the expression "directly superimposed over one another" is meant to indicate that, although there can be further layers for example interposed between said substrate and said superficial film (for example lacquer layers), no layers of further third materials are interposed between the layers consisting of the aforementioned first material and the aforementioned second material of the superficial film with optical selectivity. Since the refractive index of any transparent or translucent material varies as the wavelength of the incident wavelength varies, purely in order to simplify the present description and as a reference, hereinafter the refraction indices "n" will be indicated measured at a wavelength of 550 nm

The Applicant has found that thanks to the combination of the aforementioned specific characteristics it is possible to provide a coating superficial film with high optical selectivity that achieves a series of very advantageous technical effects, including:
- ensuring high stability of the optical, structural and functional properties, also protecting the substrate from interaction with the high-energy component of light radiation, indeed in such a systemic configuration UVB and short UVA radiation is reflected preventively by the multi-layer film and does not interact with said substrate;
- ensuring lasting screening function of harmful solar or artificial radiation, in particular UVB and short UVA radiation. On the other hand, known products with added UV absorbers, being characterised by optical properties that degrade over time, cannot ensure such characteristics of stability;
- limiting the phenomena of yellowing and loss of chromatic intensity or fading of the plastic transparent or translucent substrate;
- ensuring high thermal, mechanical and chemical stability, also in terms of resistance to corrosion;
- having advanced optical properties, with high definition and precision. This gives on the one hand the potential to generate an extremely wide range of solutions with respect to conventional known products and on the other hand gives the film according to the invention the possibility of obtaining substantially better specific functions with respect to products of the state of the art;
- having high chromatic versatility with respect to the prior art quoted above. In this way, it is possible to design a *priori* the desired optical properties according to the specific application requirements, both in the definition of the optical windows transmitted and reflected, and in the quantification of the percentages of radiation reflected/transmitted in the single spectral windows;
- delimiting in a targeted manner the spectral components (both UV and visible part) to be screened and transmitted to protect people, plants, animals or objects in general.

In accordance with the present invention, it has surprisingly been found that the aforementioned desired characteristics can be simultaneously obtained by suitably combining the sequence, the thicknesses and the materials of the layers forming the superficial film.

In the present description and in the subsequent claims, all of the numeric magnitudes indicating quantities, parameters, percentages, and so on should be considered in all circumstances to be preceded by the term "about" unless indicated otherwise. Moreover, all of the ranges of numerical magnitudes include all of the possible combinations of maximum and minimum numerical values and all of the possible intermediate ranges, as well as those specifically indicated hereinafter.

According to the invention, the layers of the aforementioned superficial film alternately consist of said first and said second material, respectively with a refractive index at 550 nm higher and lower than 2 (hereinafter also indicated with the terms: materials with high and low refractive index).

The present invention can have one or more of the preferred characteristics given hereinafter.

In a preferred embodiment, the layer close to said substrate consists of said first or second material.

Preferably, the substrate according to the invention comprises a superficial film including from 20 to 40 superimposed layers alternately consisting of a first and a second material having a refractive index at 550 nm equal to or greater and, respectively, lower than 2.

Preferably, layers that consist of said first material have a thickness comprised between 20 and 110 nm, more preferably comprised between 30 and 110 nm, even more preferably comprised between 30 and 100 nm.

Preferably, each of the layers that consist of said second material has a thickness comprised between 30 and 180 nm, more preferably comprised between 50 and 150 nm.

The transparent or translucent substrate made of plastic material is advantageously selected from the group consisting of: polyvinyl chloride, polycarbonate, acrylic-based polymers and copolymers, polymethylmethacrylate and polyacrylates, polyolefin.

A preferred example that can be used in the present invention is polymethylmethacrylate (PMMA) that is available with the trade names: Acrivill, Altuglas, Deglas, Limacryl, Lucite, Oroglas, Perclax, Perspex, Plexiglas, Plexiglass, Resartglass, Vitroflex, Trespex and Setacryl.

Preferably, when the substrate is made of PMMA it has a thickness comprised between 0.1 and 10 mm, preferably comprised between 0.2 and 5 mm.

In a preferred embodiment, the inorganic materials that can be used in the present invention are oxides, nitrides, chlorides and fluorides.

Preferably, the inorganic materials having a refractive index at 550 nm equal to or higher than 2 (the aforementioned first material with high refractive index) have a refractive index lower than 2.5.

Preferably, said first material with high refractive index can be selected from the group consisting of: titanium oxide (TiO₂), zirconium oxide (ZrO₂), chromium oxide (Cr₂O₃) and lead chloride (PbCl₂).

Preferably, the inorganic materials having a refractive index at 550 nm lower than 2 (the aforementioned second material with low refractive index) have a refractive index comprised between 1.2 and 1.6.

Preferably, said second material with low refractive index can be selected from the group consisting of: silicon oxide (SiO₂), magnesium fluoride (MgF₂), calcium fluoride (CaF₂), lithium fluoride (LiF), sodium fluoride (NaF) and cryolite (Na₃AlF₆). In a further preferred embodiment, the substrate according to the invention further comprises, interposed between said substrate and said superficial film, a lacquer layer having a thickness comprised between 0.5 and 15 µm, preferably comprised between 2 and 8 µm.

Advantageously, the lacquer layer allows said film (also called dichroic film in the present invention) to adhere on the substrate without causing peeling or scratching phenomena due to overheating of the substrate in the vacuum deposition step of the dichroic film.

Moreover, the lacquer contributes to the reflectance of the UVB and short UVA components of the end product.

Preferably, said lacquer layer is made with a silicone resin, more preferably polysiloxane resin.

In a further preferred embodiment, the final overall thickness of the superficial film is comprised between 400 nm and 5000 nm, preferably comprised between 500 and 3000 nm.

The transparent or translucent substrates comprising a superficial film having optical selectivity to solar or artificial radiation according to the invention can be used to make screens, walls, dividers or protective covers in general, for example to catch the sun or the protect people, plants, animals or objects in general, from solar or artificial radiation considered harmful, in particular UVB and short UVA radiation.

In accordance with the present invention, and thanks to the aforementioned specific characteristics of the superficial film it is possible to simultaneously achieve both adequate characteristics of transmittance of the long UVA spectral component, and adequate characteristics of reflectance of the UVB and short UVA and visible spectral component when it is illuminated by sunlight or artificial radiation.

In particular, the substrate comprising the superficial film according to the invention is preferably characterised by an average transmittance of the 350 - 420 nm spectral component higher than 65%, an average transmittance of the 290 - 350 nm spectral component lower than 6%, and an average transmittance of the 420 - 700 nm spectral component lower than 20%.

More preferably, the substrate comprising the superficial film according to the invention is characterised by an average transmittance of the 350 - 420 nm spectral component higher than 80 %.

More preferably, the substrate comprising the superficial film according to the invention is characterised by an average transmittance of the 290 - 350 nm spectral component lower than 2 %.

More preferably, the substrate comprising the superficial film according to the invention is characterised by an average transmittance of the 420 - 700 nm spectral component lower than 15 %.

In a further particularly preferred embodiment, the substrate comprising the superficial film according to the present invention is preferably characterised by an average reflectance of the 350 - 420 nm spectral component lower than 40%, an average reflectance of the 290 - 350 nm spectral component higher than 75%, and an average reflectance of the 420 - 700 nm spectral component higher than 70%,

More preferably, the substrate comprising the superficial film according to the invention is characterised by an average reflectance of the 350 - 420 nm spectral component lower than 35%, even more preferably lower than 15%.

More preferably, the substrate comprising the superficial film according to the invention is characterised by an average reflectance of the 290 - 350 nm spectral component higher than 85 %, even more preferably higher than 92%, even more preferably higher than 95%.

More preferably, the substrate comprising the superficial film according to the invention is characterised by an average reflectance of the 420 - 700 nm spectral component higher than 75%, even more preferably higher than 78%, even more preferably higher than 85%.

In this way, it is possible to eliminate or reduce the aforementioned problems relative to the prior art.

In accordance with a second aspect thereof, the present invention concerns superficial films with optical selectivity to solar or artificial radiation according to claim 10.

Advantageously, the superficial film according to the invention is preferably characterised by an average transmittance of the 350 - 420 nm spectral component higher than 65%, an average transmittance of the 290 - 350 nm spectral component lower than 15%, and an average transmittance of the 420 - 700 nm spectral component lower than 20%.

More preferably, the superficial film according to the invention is characterised by an average transmittance of the 350 - 420 nm spectral component higher than 80%, even more preferably higher than 90 %.

More preferably, the superficial film according to the invention is characterised by an average transmittance of the 290 - 350 nm spectral component lower than 10 %, even more preferably lower than 6 %, even more preferably lower than 2%. More preferably, the superficial film according to the invention is characterised by an average transmittance of the 420 - 700 nm spectral component lower than 15%.

In a particularly preferred embodiment, the superficial film according to the present invention is preferably characterised by an average reflectance of the 350 - 420 nm spectral component lower than 40 %, an average reflectance of the 290 - 350 nm spectral component higher than 75 %, and an average reflectance of the 420 - 700 nm spectral component higher than 70 %.

More preferably, the superficial film according to the invention is characterised by an average reflectance of the 350 - 420 nm spectral component lower than 35 %, even more preferably lower than 15 %.

More preferably, the superficial film according to the invention is characterised by an average reflectance of the 290 - 350 nm spectral component higher than 85%, even more preferably higher than 92 %, even more preferably higher than 95%. More preferably, the superficial film according to the invention is characterised by an average reflectance of the 420 - 700 nm spectral component higher than 75%, even more preferably higher than 78%, even more preferably higher than 85%. In this way, the aforementioned problems are advantageously eliminated.

In accordance with a third aspect thereof, the present invention concerns a method for manufacturing a substrate according to claim 12 and comprising the steps of:
a) providing a transparent or translucent substrate made of glassy or plastic material;
b) optionally, pre-bending and/or drilling and/or washing said substrate;
c) optionally, subjecting said substrate to a lacquering treatment, preferably by means of a silicone resin;
d) washing said substrate, optionally lacquered, at least by means of a solvent;
e) forming said superficial film on the surface of said substrate, preferably by means of vacuum deposition;
f) optionally, bending and drilling said substrate coated with said film.

When the substrate is made of plastic material the substrate is preferably subjected to a lacquering treatment by means of a silicone resin.

The silicone resin used is a polysiloxane resin that allows optimal adhesion of the dichroic film on the substrate of plastic material, as well as having properties of UV resistance and scratchproof properties.

Preferably, the aforementioned lacquering treatment is carried out at a temperature less than 120°C.

When the substrate is made of glassy material, the superficial film is preferably formed directly on the surface of the substrate through vacuum deposition.

Preferably, the substrate is washed in an automatic washing system with ultrasound agitation in which acid trays, alkaline trays and buffer trays are alternated. Finally, the sheets are rinsed in demineralized water and dried in hot air through IR lamp.

The deposition of the superficial film on the substrate, optionally lacquered, is carried out through vacuum deposition techniques, commonly used and *per* se known. Preferably, through sputtering, more preferably magnetron sputtering. Alternatively, it is recommended to use Physical Vapor Deposition (PVD), for example by means of Electron Beam Physical Vapor Deposition (EBPVD), reactive and non-reactive sputtering.

The bending and drilling steps are commonly used and are *per se* known to those skilled in the art.

Advantageously, the possible deposition of a lacquer layer carries out the dual function of ensuring better adhesion between the substrate and the first layer of the superficial film and of contributing to the reflectance of the UVB and short UVA components of the end product.

In accordance with the invention, it has been observed that by operating in accordance with the method described above it is possible to obtain a film with high optical selectivity to solar or artificial radiation.

### Brief description of the figures

Further characteristics and advantages of the invention will become clearer from the following description of some preferred embodiments thereof, made hereinafter, for indicating and not limiting purposes, with reference to the attached drawings. In such drawings:
- figure 1 shows the reflectance spectrum as a function of the wavelength of the superficial film according to Example 2 in the optical window (290-700 nm).
- figure 2 shows the reflectance spectrum as a function of the wavelength of the reference superficial film described in international patent application WO 2013/175274 in the optical window (290-700 nm).

### Detailed description of the currently preferred embodiments

### EXAMPLE 1 (invention)

A first multi-layer film according to the invention consisting of 10 superimposed layers was prepared through a sputtering process according to the following experimental protocol:
a) provision of a substrate of clear polymethylmethacrylate;
b) cleaning of the substrate following a first cleaning cycle;
c) lacquering treatment of the substrate through a silicone resin (lacquer thickness = 8 µm);
d) cleaning of the substrate following a second cleaning cycle;
e) formation of the dichroic film on the superficial of the substrate through vacuum deposition.

At the end of the deposition operations an innovative product was made having the composition illustrated in the following Table I.

**Table I**

| **Layer** | **Material** | **Thickness (nm)** |
|---|---|---|
| 1 | TiO₂ | 40.35 |
| 2 | SiO₂ | 127.96 |
| 3 | TiO₂ | 20.16 |
| 4 | SiO₂ | 56.94 |
| 5 | TiO₂ | 69.28 |
| 6 | SiO₂ | 75.25 |
| 7 | TiO₂ | 71.44 |
| 8 | SiO₂ | 133.69 |
| 9 | TiO₂ | 60.95 |
| 10 | SiO₂ | 213.4 |

Such a sample was then subjected to standard tests to determine the reflectance and transmittance of the superficial film with regard to UVB and short UVA radiation in a wavelength field comprised between 250 and 700 nm using a DATACOLOR SPECTRAFLASH SF600 PLUS CT spectrophotometer.

The results of the measurements taken are shown in the following Table II.

**Table II**

| | **Average reflectance (%)** | | | **Average transmittance (%)** | | |
|---|---|---|---|---|---|---|
| **Sample** | **290-350 nm** | **350-420 nm** | **420-700 nm** | **290-350 nm** | **350-420 nm** | **420-700 nm** |
| **Example 1** | 78.4 | 13.7 | 67.4 | 20.5 | 85.6 | 31.6 |

### EXAMPLE 2 (invention)

A second multi-layer film according to the invention consisting of 32 superimposed layers was prepared through a sputtering process according to the following experimental protocol:
a) provision of a substrate of clear polymethylmethacrylate;
b) cleaning of the substrate following a first cleaning cycle;
c) lacquering treatment of the substrate through a silicone resin (lacquer thickness = 8 µm);
d) cleaning of the substrate following a second cleaning cycle;
e) formation of the dichroic film on the superficial of the substrate through vacuum deposition.

At the end of the deposition operations an innovative product was made having the composition illustrated in the following Table III.

**Table III**

| **Layer** | **Material** | **Thickness (nm)** |
|---|---|---|
| 1 | SiO₂ | 64.23 |
| 2 | ZrO₂ | 79.72 |
| 3 | SiO₂ | 113.81 |
| 4 | ZrO₂ | 93.90 |
| 5 | SiO₂ | 100.74 |
| 6 | ZrO₂ | 75.88 |
| 7 | SiO₂ | 95.91 |
| 8 | ZrO₂ | 91.37 |
| 9 | SiO₂ | 111.73 |
| 10 | ZrO₂ | 65.71 |
| 11 | SiO₂ | 93.88 |
| 12 | ZrO₂ | 79.53 |
| 13 | SiO₂ | 128.11 |
| 14 | ZrO₂ | 69.46 |
| 15 | SiO₂ | 94.21 |
| 16 | ZrO₂ | 67.75 |
| 17 | SiO₂ | 96.19 |
| 18 | ZrO₂ | 97.02 |
| 19 | SiO₂ | 105.92 |
| 20 | ZrO₂ | 61.08 |
| 21 | SiO₂ | 81.77 |
| 22 | ZrO₂ | 58.46 |
| 23 | SiO₂ | 81.78 |
| 24 | ZrO₂ | 58.97 |
| 25 | SiO₂ | 82.13 |
| 26 | ZrO₂ | 59.18 |
| 27 | SiO₂ | 82.11 |
| 28 | ZrO₂ | 57.66 |
| 29 | SiO₂ | 78.07 |
| 30 | ZrO₂ | 56.89 |
| 31 | SiO₂ | 82.95 |
| 32 | ZrO₂ | 73.26 |

Such a sample was then subjected to standard tests to determine the reflectance and transmittance of the superficial film with regard to UVB and short UVA radiation in a wavelength field comprised between 250 and 700 nm using a DATACOLOR SPECTRAFLASH SF600 PLUS CT spectrophotometer.

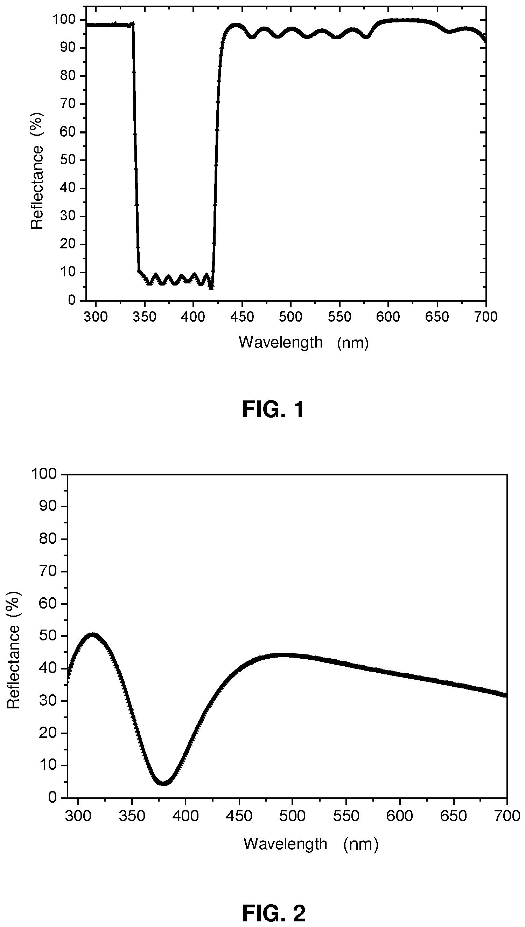

The results of the measurements taken are represented graphically in figure 1 and in the following Table IV.

**Table IV**

| | **Average reflectance (%)** | | | **Average transmittance (%)** | | |
|---|---|---|---|---|---|---|
| **Sample** | **290-350 nm** | **350-420 nm** | **420-700 nm** | **290-350 nm** | **350-420 nm** | **420-700 nm** |
| **Example 2** | 98.1 | 7.4 | 95.2 | 1.2 | 91.8 | 4.0 |

### EXAMPLES (reference)

The examples stacks shown in the documents of the state of the art described above US 2004/0240067, JP 2002-156507 and WO 2013/175274 were simulated. The thickness of the samples produced was determined through systems for controlling the thickness *in situ* and confirmed on the single layers through analyses carried out by high resolution Atomic Force Microscope (AFM). Then the optical characteristics were analysed through spectrophotometric analyses, acquiring and analysing the transmittance spectra (T) and the reflectance spectra (R) of the different layers.

In particular, since the specific techniques of the substrates on which the different stacks are grown are not defined in the documents of the state of the art and can vary according to the specific application and the specific requirements, the absolute optical properties of the different stacks mentioned were analysed, in order to investigate the reflectance properties thereof in the optical windows UVB (250-315 nm) and UVA (316-400 nm).

The computer analysis of the stacks was carried out with the following reference parameters:
Light: White
Incident medium: Air
Substrate: glass
Exit medium: air
Detector: Ideal
Incident angle: 0.0 (deg)
Reference: 550 nm (US 2004/0240067 and WO 2013/175274); 365 nm (JP 2002-156507)

Table V below shows the results for the different examples analysed:

**Table V (reference)**

| US 2004/0240067 | **% Average reflectance in the band (290-350 nm)** | **% Average reflectance in the band (350-420 nm)** |
|---|---|---|
| Example 1 | 17.41 | 29.76 |
| Example 2 | 15.37 | 26.42 |
| Example 3 | 18.24 | 5.17 |

| JP 2002-156507 | **% Average reflectance in the band (290-350 nm)** | **% Average reflectance in the band (350-420 nm)** |
|---|---|---|
| Example 1 | 4.65 | 4.32 |
| Example 2 | 4.82 | 4.53 |
| Example 3 | 4.96 | 4.56 |
| Example 4 | 5.82 | 4.86 |
| Example 5 | 4.97 | 4.46 |
| Example 6 | 4.83 | 4.72 |
| Example 7 | 5.25 | 4.64 |
| Example 8 | 6.42 | 5.84 |
| Example 9 | 4.67 | 4.52 |
| Example 10 | 5.02 | 4.87 |

The multi-layer films according to the state of the art display high optical transparency with regard to the UVA band of the electromagnetic spectrum, and a significantly lower reflectance of the UVB component (290-350 nm) with respect to the films of the invention: in particular an average reflectance lower than 20% for examples 1-3 given in document US 2004/0240067 and an average reflectance lower than 7% for all of the examples 1-10 given in document JP 2002-156507.

The results of the measurements taken on the example described in international patent application WO 2013/175274 (6 layers ABABAB) are represented graphically in figure 2 and in the following Table VI.

**Table VI (reference)**

| | **Average transmittance (%)** | | |
|---|---|---|---|
| | **290-350 nm** | **350-420 nm** | **420-700 nm** |
| **Example (**WO 2013/175274**)** | 56.1 | 86.3 | 61.2 |

From the examination of the curves given in the attached figures 1 and 2, it is immediately clear how the dichroic films of the invention are able to show extremely selective optical properties with regard to UVA and UVB radiation for example allowing an average percentage transmittance less than 6% with regard to UVB and short UVA radiation, and an average percentage transmittance higher than 65% with regard to long UVA radiation and lower than 20% with regard to the visible part of solar radiation.

In sharp contrast, the example described in WO 2013/175274 has optical characteristics in the spectral windows 290-350 nm and 420-700 nm absolutely far from the optical properties of the dichroic film according to the invention. The dichroic films according to the invention were deposited on a sheet-like transparent substrate made of polymethylmethacrylate through the vacuum deposition magnetron sputtering technique in the presence of a lacquer layer as described above. The substrates according to the invention advantageously have the following optical characteristics: an average transmittance of the 350 - 420 nm spectral component higher than 65 %, an average transmittance of the 290 - 350 nm spectral component lower than 6 % and an average transmittance of the 420 - 700 nm spectral component lower than 20%.

Of course, those skilled in the art can bring modifications and variants to the finding described above in order to satisfy specific and contingent application requirements, said variants and modifications in any case being covered by the scope of protection as defined by the following claims.

## Claims

1. Transparent or translucent substrate made of glassy or plastic material comprising a superficial film including from 10 to 50 layers directly superimposed over one another alternately consisting of a first and a second material having a refractive index at 550 nm equal to or greater and, respectively, lower than 2, **characterised in that** each of the layers consisting of said first material has a thickness comprised between 10 and 110 nm and each of the layers consisting of said second material has a thickness comprised between 50 and 250 nm.

2. Substrate according to claim 1, wherein the layer close to said substrate consists of said first or second material.

3. Substrate according to any one of claims 1 to 2, wherein said first material has a refractive index lower than 2.5.

4. Substrate according to any one of claims 1 to 3, wherein said second material has a refractive index comprised between 1.2 and 1.6.

5. Substrate according to any one of claims 1, 3 or 4, further comprising, interposed between said substrate and said superficial film, a lacquer layer having a thickness comprised between 0.5 and 15 µm.

6. Substrate according to any one of claims 1 to 5, wherein said superficial film has a final overall thickness comprised between 400 nm and 5000 nm.

7. Substrate according to any one of claims 1 to 6, wherein the average transmittance of the 350 - 420 nm spectral component is higher than 65%, the average transmittance of the 290 - 350 nm spectral component is lower than 6% and the average transmittance of the 420 - 700 nm spectral component is lower than 20%.

8. Substrate according to any one of claims 1 to 6, wherein the average reflectance of the 350 - 420 nm spectral component is lower than 40%, the average reflectance of the 290 - 350 nm spectral component is higher than 75% and the average reflectance of the 420 - 700 nm spectral component is higher than 70%.

9. Substrate according to any one of claims 1 to 8, in the form of screens, walls, dividers or protective covers.

10. Films with optical selectivity to solar or artificial radiation including a plurality of layers directly superimposed over one another alternately consisting of a first and a second material having a refractive index at 550 nm equal to or greater and, respectively, lower than 2, **characterised in that** each of the layers consisting of said first material has a thickness comprised between 10 and 110 nm and each of the layers consisting of said second material has a thickness comprised between 50 and 250 nm.

11. Film according to claim 10, as defined in any one of claims 2 to 8.

12. Method for manufacturing a substrate according to any one of claims 1 to 9, comprising the steps of:
a) providing a transparent or translucent substrate made of glassy or plastic material;
b) optionally, pre-bending and/or drilling and/or washing said substrate;
c) optionally, subjecting said substrate to a lacquering treatment;
d) washing said substrate, optionally lacquered, at least by means of a solvent;
e) forming said film on the surface of said substrate;
f) optionally, bending and drilling said substrate coated with said film.

13. Method according to claim 12, wherein said lacquering treatment of said step c) is carried out by means of a silicone resin.

14. Method according to claim 12 or 13, wherein said step e) is carried out by means of vacuum deposition.

## Patentansprüche

1. Transparentes oder lichtdurchlässiges Substrat aus Glas oder Kunststoff mit einer Oberflächenschicht mit 10 bis 50 direkt übereinanderliegenden Schichten, die abwechselnd aus einem ersten und einem zweiten Material mit einem Brechungsindex bei 550 nm gleich oder größer bzw. kleiner als 2 bestehen, **dadurch gekennzeichnet, dass** jede der aus dem ersten Material bestehenden Schichten eine Dicke zwischen 10 und 110 nm und jede der aus dem zweiten Material bestehenden Schichten eine Dicke zwischen 50 und 250 nm aufweist.

2. Substrat nach Anspruch 1, wobei die Schicht in der Nähe des Substrats aus dem ersten oder zweiten Material besteht.

3. Substrat nach einem der Ansprüche 1 bis 2, wobei das erste Material einen Brechungsindex von weniger als 2,5 aufweist.

4. Substrat nach einem der Ansprüche 1 bis 3, wobei das zweite Material einen Brechungsindex zwischen 1,2 und 1,6 aufweist.

5. Substrat nach einem der Ansprüche 1, 3 oder 4, ferner mit einer zwischen dem Substrat und der Oberflächenschicht angeordneten Lackschicht mit einer Dicke zwischen 0,5 und 15 µm.

6. Substrat nach einem der Ansprüche 1 bis 5, wobei die Oberflächenschicht eine abschließende Gesamtdicke zwischen 400 nm und 5000 nm aufweist.

7. Substrat nach einem der Ansprüche 1 bis 6, wobei die durchschnittliche Durchlässigkeit der Spektralkomponente bei 350 - 420 nm höher als 65 % ist, die durchschnittliche Durchlässigkeit der Spektralkomponente bei 290 - 350 nm niedriger als 6 % ist und die durchschnittliche Durchlässigkeit der Spektralkomponente bei 420 - 700 nm niedriger als 20 % ist.

8. Substrat nach einem der Ansprüche 1 bis 6, wobei das durchschnittliche Reflexionsvermögen der Spektralkomponente bei 350 - 420 nm weniger als 40 %, das durchschnittliche Reflexionsvermögen der Spektralkomponente bei 290 - 350 nm mehr als 75 % und das durchschnittliche Reflexionsvermögen der Spektralkomponente bei 420 - 700 nm mehr als 70 % beträgt.

9. Substrat nach einem der Ansprüche 1 bis 8, in Form von Schirmen, Wänden, Trennwänden oder Schutzabdeckungen.

10. Schichten mit optischer Selektivität für solare oder künstliche Strahlung, die eine Vielzahl von direkt übereinanderliegenden Schichten umfassen, die abwechselnd aus einem ersten und einem zweiten Material bestehen, das einen Brechungsindex bei 550 nm gleich oder größer bzw. kleiner als 2 aufweist, **dadurch gekennzeichnet, dass** jede der aus dem ersten Material bestehenden Schichten eine Dicke zwischen 10 und 110 nm und jede der aus dem zweiten Material bestehenden Schichten eine Dicke zwischen 50 und 250 nm aufweist.

11. Schicht nach Anspruch 10, wie in einem der Ansprüche 2 bis 8 definiert.

12. Verfahren zur Herstellung eines Substrats nach einem der Ansprüche 1 bis 9, das die folgenden Schritte umfasst:
a) Bereitstellen eines transparenten oder lichtdurchlässigen Substrats aus Glas oder Kunststoff;
b) gegebenenfalls Vorbiegen und/oder Bohren und/oder Waschen des Substrats;
c) gegebenenfalls Unterziehen des Substrats einer Lackierbehandlung;
d) Waschen des gegebenenfalls lackierten Substrats mindestens mit einem Lösungsmittel;
e) Bilden der Schicht auf der Oberfläche des Substrats;
f) gegebenenfalls Biegen und Bohren des mit der Schicht beschichteten Substrats.

13. Verfahren nach Anspruch 12, wobei die Lackierbehandlung des Schritts c) mit einem Silikonharz durchgeführt wird.

14. Verfahren nach Anspruch 12 oder 13, wobei der Schritt e) mittels Vakuumabscheidung durchgeführt wird.

## Revendications

1. Substrat transparent ou translucide en matière vitreuse ou plastique comprenant un film superficiel comportant de 10 à 50 couches directement superposées constituées alternativement d'un premier et d'un second matériau ayant un indice de réfraction à 550 nm égal ou supérieur et respectivement inférieur à 2, **caractérisé en ce que** chacune des couches constituées dudit premier matériau a une épaisseur comprise entre 10 et 110 nm et **en ce que** chacune des couches constituées dudit second matériau a une épaisseur comprise entre 50 et 250 nm.

2. Substrat selon la revendication 1, dans lequel la couche proche dudit substrat est constituée dudit premier ou second matériau.

3. Substrat selon l'une quelconque des revendications 1 à 2, dans lequel ledit premier matériau a un indice de réfraction inférieur à 2,5.

4. Substrat selon l'une quelconque des revendications 1 à 3, dans lequel ledit second matériau a un indice de réfraction compris entre 1,2 et 1,6.

5. Substrat selon l'une quelconque des revendications 1, 3 ou 4, comprenant en outre, interposée entre ledit substrat et ledit film superficiel, une couche de laque d'une épaisseur comprise entre 0,5 et 15 µm.

6. Substrat selon l'une quelconque des revendications 1 à 5, dans lequel ledit film superficiel a une épaisseur totale finale comprise entre 400 nm et 5000 nm.

7. Substrat selon l'une quelconque des revendications 1 à 6, dans lequel la transmittance moyenne de la composante spectrale 350 - 420 nm est supérieure à 65 %, la transmittance moyenne de la composante spectrale 290 - 350 nm est inférieure à 6 % et la transmittance moyenne de la composante spectrale 420 - 700 nm est inférieure à 20 %.

8. Substrat selon l'une quelconque des revendications 1 à 6, dans lequel la réflectance moyenne de la composante spectrale 350 - 420 nm est inférieure à 40 %, la réflectance moyenne de la composante spectrale 290 - 350 nm est supérieure à 75 % et la réflectance moyenne de la composante spectrale 420 - 700 nm est supérieure à 70 %.

9. Substrat selon l'une quelconque des revendications 1 à 8, sous forme d'écrans, de parois, de cloisons ou de couvertures de protection.

10. Films à sélectivité optique au rayonnement solaire ou artificiel comprenant plusieurs couches directement superposées constituées alternativement d'un premier et d'un second matériau ayant un indice de réfraction à 550 nm égal ou supérieur et, respectivement, inférieur à 2, **caractérisés en ce que** chacune des couches constituées dudit premier matériau a une épaisseur comprise entre 10 et 110 nm et que chacune des couches constituées dudit second matériau a une épaisseur comprise entre 50 et 250 nm.

11. Film selon la revendication 10, tel que défini dans l'une quelconque des revendications 2 à 8.

12. Procédé de fabrication d'un substrat selon l'une quelconque des revendications 1 à 9, comprenant les étapes suivantes :
a) fournir un substrat transparent ou translucide en matière vitreuse ou plastique ;
b) éventuellement, pré-plier et/ou percer et/ou laver ledit substrat ;
c) éventuellement, soumettre ledit substrat à un traitement de laquage ;
d) laver ledit substrat, éventuellement laqué, au moins au moyen d'un solvant ;
e) former ledit film sur la surface dudit substrat ;
f) éventuellement, plier et percer ledit substrat recouvert dudit film.

13. Procédé selon la revendication 12, dans lequel ledit traitement de laquage de ladite étape
c) est réalisé au moyen d'une résine de silicone.

14. Procédé selon la revendication 12 ou 13, dans lequel l'étape e) est réalisée par dépôt sous vide.
